# EUROPÄISCHE PATENTSCHRIFT

(11) **EP 0 858 055 B1**
(45) Veröffentlichungstag und Bekanntmachung des Hinweises auf die Patenterteilung: **12.10.2005**
(21) Anmeldenummer: 98103641.1
(22) Anmeldetag: 21.08.1996
(51) Int. Cl.: G07B 17/00

(54) **Vorrichtung zur Vermessung von Poststücken**
Device for measuring postal items
Dispositif de mesure d'objets postaux

(30) Priorität: 29.09.1995 DE 19536482; 04.12.1995 DE 19545158
(43) Veröffentlichungstag der Anmeldung: 12.08.1998
(62) Teilanmeldung aus: 96932448.2
(73) Patentinhaber: Wincor Nixdorf International GmbH, 33106 Paderborn (DE)
(72) Erfinder: Lutz, Bernhard, 33129 Delbrück (DE); Tewes, Udo, 33106 Paderborn (DE); Urban, Uwe, 33102 Paderborn (DE); Kremer, Holger, 33175 Bad Lippspringe (DE); Flückiger, Hans Walter, 8618 Ötwil am See (CH); Sieber, Stefan, 8952 Schlieren (CH)

(56) Entgegenhaltungen:
- EP-A- 0 031 973
- EP-A- 0 335 559
- EP-A- 0 643 374
- EP-A- 0 647 479
- DE-A- 19 512 133
- Patent Abstracts of Japan, vol. 6, no. 125(P-127); & JP-A-5750602 (MATSUSHITA DENKI SANGYO K.K.), 25-03-1982

## Beschreibung

Die Vorrichtung betrifft ein Gerät, mit dem Poststücke oder dergleichen automatisch vermessen werden können.

Es handelt sich um Geräte, welche in der Lage sind, die Beförderungsgebühr für das Poststück entsprechend den jeweils geltenden Bestimmungen aus physikalischen Eigenschaften des Poststücks zu ermitteln.

In der EP-A-0 264 502 wird ein Gerät beschrieben, welches Briefe entgegennimmt, auswiegt, frankiert und ein Porto kassiert. Dieses Gerät ist jedoch nur in der Lage, durch einen Schlitz passende flache Briefe entgegenzunehmen und weiterzubehandeln.

Aus der EP-A-0 643 374 ist bereits ein elektronisches Frankiersystem für Poststücke bekannt mit einem Annahmefach für zu bearbeitende Poststücke, einer Steuereinrichtung, einer Dispositionsplatte für die Poststücke und Meßeinrichtungen für das Gewicht und die Abmessungen des Poststücks, aus denen in der Steuereinrichtung ein Freimachungsbetrag errechnet wird.

Die Meßeinrichtungen sind eine Waage und eine Anzahl von Lichtschranken für die maximal zulässige Länge und Breite des Poststücks. Zum Ausmessen der Länge und Breite wird das Poststück zu zwei zueinander senkrecht stehenden Kanten der Dispositionsplatte ausgerichtet und aus der Überdeckung einzelner Lichtschranken auf die Abmessungen geschlossen.

In der EP-A-0 647 479 ist ein Paket-Sortiersystem offenbart, welches die Oberfläche auf einem Transportband beförderter Pakete mit einer Videokamera abtastet und die Höhe der Pakete mit einem Ultraschall-Sensor misst. Mit mehreren weiteren Kameras wird das Adressenfeld erfasst.

Die Gebühren für Postsendungen richten sich nicht nur nach dem Gewicht sondern auch nach den Abmessungen. Somit müssen in einem System zur automatischen Annahme von Poststücken auch deren Abmessungen einwandfrei ermittelt werden können. Dies bereitet bei den bekannten Paket-Sortiersystemen bei nicht völlig planen Poststücken, wie z.B. dickeren Briefen und Päckchen unter Umständen erhebliche Schwierigkeiten, da bei dem Versuch, die maximale geometrische Ausdehnung eines größeren Gegenstandes mit einer Kamera auszumessen, sich eine Messunsicherheit aufgrund der Parallaxe ergibt.

In der DE 195 12 133 A1 ist eine Vorrichtung zur Kontur-Abbildung eines Flüssigkeitsbehälters beschrieben. Der Behälter wird von einer seitlich neben dem Behälter angebrachten Lichtquelle beleuchtet und das Bild des Behälters wird von einer auf der anderen Seite des Behälters angeordneten Kamera erfasst. Zwischen der Lichtquelle und dem Behälter ist eine erste Fresnel-Linse und zwischen dem Behälter und der Kamera ist eine zweite Fresnel-Linse angeordnet, wobei die Lichtquelle und die Kamera jeweils im Brennpunkt der jeweiligen Fresnel-Linse angeordnet sind.

Eine solche Anordnung ist jedoch für die Vermessung von Poststücken nicht geeignet, da durch eine seitliche Beleuchtung und eine seitliche Anordnung der Kamera das Postgut nicht hinreichend hinsichtlich seiner geometrischen Abmessungen erfasst werden kann.

Aufgabe der Erfindung ist es, ein Gerät anzugeben, mit dem praktisch alle zur Beförderung zugelassenen Poststücke entgegengenommen, ausgemessen und behandelt werden können. Insbesondere soll eine Vorrichtung geschaffen werden, mit der die horizontalen Abmessungen von Poststücken unabhängig von ihrer Höhe (d.h. von ihrem Abstand zur Kamera) korrekt erfasst werden können.

Die Erfindung löst diese Aufgabe dadurch, daß der das Poststück einliefernde Kunde dasselbe auf einer Dispositionsfläche ablegt. Eine Lichtschrankenzeile mißt die Dicke des Poststücks, und mit einer elektronischen Kamera werden Bilder des Poststücks erstellt. Mit Hilfe der Bilder kann sowohl die Länge und Breite des Poststücks ermittelt, die Position einer Markierung, insbesondere einer Briefmarke oder eines Klebeetiketts bestimmt und verifiziert werden als auch ein Einlieferungsprotokoll erstellt werden, ohne daß der Gegenstand notwendig in einer bestimmten Lage abgeliefert werden muß.

Eine exakte Messung der Länge und Breite des Poststücks wird dadurch ermöglicht, daß zwischen der Dispositionsfläche und der Kamera eine Fresnel-Linse so angeordnet ist, daß ihr Brennpunkt in dem Brennpunkt der Kameraoptik liegt, wobei die Abmessungen der Fresnel-Linse größer als die senkrechte Projektion des größten zu vermessenden Poststücks auf die Dispositionsfläche ist. Durch den Einsatz einer Fresnel-Linse wird ein Parallaxenausgleich geschaffen, der es ermöglicht, die Kamera auf Unendlich einzustellen, so dass eine Fokussierung der Kamera auf die jeweilige Höhe des Objektes entfällt.

Auch größere Fresnel-Linse können preiswert hergestellt werden. Sie nehmen nur geringen Raum in Richtung der optischen Achse ein, so daß kostengünstige raumsparende Meßsysteme aufgebaut werden können, mit denen auch größere Gegenstände genau ausgemessen werden können.

Die Dispositionsfläche ist zweckmäßigerweise eine lichtstreuende Fläche, so daß das auszumessende Poststück auf einer diffus beleuchteten Fläche liegt. Die Dispositionsfläche kann dabei ein lichtdurchlässiger Diffusor, also eine Mattscheibe sein, wobei die Lichtquelle vorzugsweise unterhalb der Dispositionsfläche und die Kamera darüber angeordnet ist. Bei einer lichtdurchlässigen Dispositionsfläche ist die Lichtquelle, die auch mehrere Lampen umfassen kann, vorzugsweise seitlich oberhalb der Dispositionsfläche angeordnet.

Die Abbildung des Poststücks oder seines Schattenrisses auf das CCD-Element der elektronischen Kamera ermöglicht dann in an sich bekannter Weise das Ermitteln der exakten Abmessungen der Poststücke. Neben einer raumsparenden, technisch einfachen und preiswerten Lösung zur Vermessung der Kontur von Poststücken hat die erfindungsgemäße Lösung noch einen weiteren Vorteil: Wenn die Fresnel-Linse so angeordnet wird, daß sie aus dem Strahlengang der Kamera betriebsmäßig ausrückbar ist, kann mit derselben oder auch einer benachbarten weiteren Kamera auch eine Aufnahme von der Oberfläche des Poststücks gemacht werden, um beispielsweise eine Quittung für die Entgegennahme und Bearbeitung des Poststücks zu erstellen, Adreßcodes auszuwerten und dergleichen. Hierzu ist gegebenenfalls lediglich eine zusätzliche Lichtquelle vorzusehen, um das Poststück von oben zu beleuchten.

Gemäß einer alternativen Ausführungsform der Erfindung wird vorgeschlagen, die eingangs genannte Vorrichtung so auszubilden, daß zwischen der Lichtquelle und dem Poststück eine Fresnel-Linse und zwischen dem Poststück und der Kamera ein lichtdurchlässiger Diffusor angeordnet ist. Dabei kann entweder die der der Kamera zugewandte Seite der Fresnel-Linse selbst als Auflagefläche verwendet werden, oder die Auflagefläche ist eine zwischen der Fresnel-Linse und dem Diffusor angeordnete transparente Platte.

Weitere vorteilhafte Ausgestaltungen und Varianten der Erfindung sind in der nachfolgenden Beschreibung und Zeichnung von Ausführungsbeispielen sowie in den Patentansprüchen dargestellt. Es zeigt:
- Fig. 1: eine schematische Darstellung einer Poststück-Behandlungseinrichtung in einer bevorzugten Ausführungsform,
- Fig. 2-5: die Einrichtung aus Fig. 1 in verschiedenen Arbeitssituationen,
- Fig. 6: eine schematische Darstellung einer erfindungsgemäßen Meßvorrichtung für die Poststück-Dimensionen gemäß einer ersten Ausführungsform,
- Fig. 7: eine der Figur 6 entsprechende Darstellung einer zweiten Ausführungsform der Meßvorrichtung.

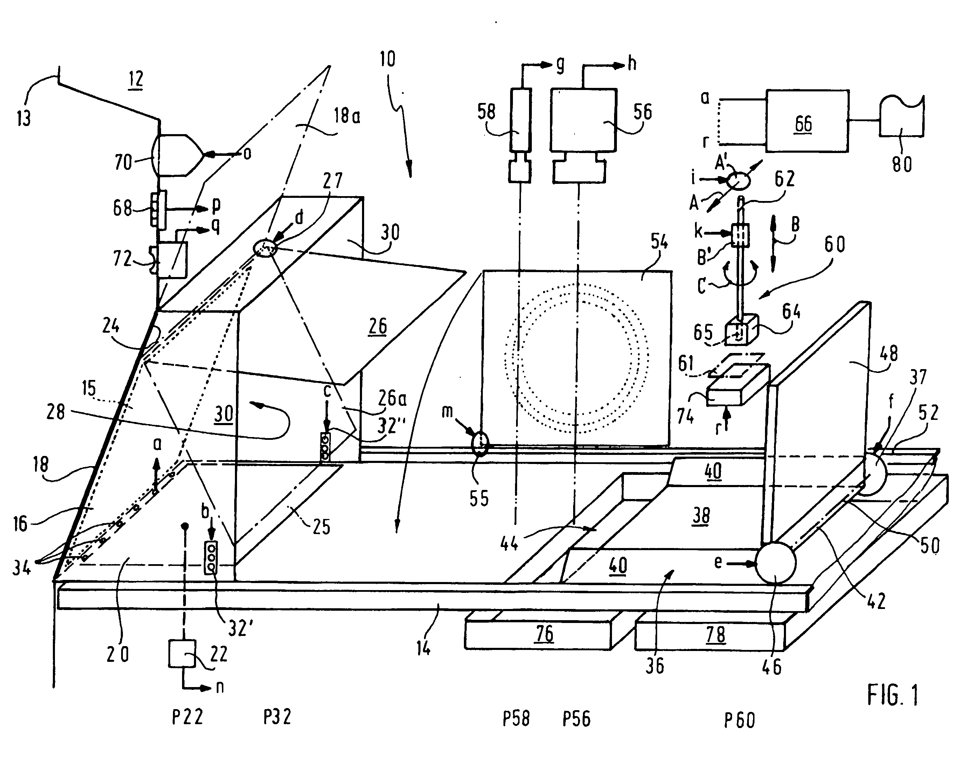

In Figur 1 ist eine Vorrichtung 10 zur automatischen Behandlung von Poststücken in einer perspektivischen Seitenansicht schematisch dargestellt. Sie ist in ein Gehäuse 12 eingebaut von dem der besseren Anschaulichkeit wegen nur die Kontur der Vorderwand 13 gezeigt ist. Die im folgenden beschriebenen Baugruppen sind auf einem Rahmen 14 aufgebaut, der mitsamt der Vorderwand 13 auf nicht dargestellten Teleskopschienen in dem Gehäuse 12 verschieblich gelagert ist.

Hinter einem Durchbruch 15 in der Vorderwand 13 ist ein Annahmefach 16 angeordnet, das durch eine Schiebetür 18 verschlossen ist. Um das Annahmefach 16 einem Kunden zugänglich zu machen, kann die Schiebetür 18 nach oben in die mit strichpunktierten Linien dargestellte Position 18a geschoben werden. Nach unten ist das Annahmefach durch die Wägeplatte 20 einer elektronischen Waage 22 begrenzt. Oberhalb der Schiebetür 18 ist an die Vorderwand 24 des Annahmefachs 16 eine Verschlußklappe 26 angelenkt, die zwischen einer waagerecht in das Innere der Vorrichtung ragenden Position und einer nach unten geklappten Position 26a verschwenkbar ist. Die Schiebetür 18 und die Verschlußklappe 26 werden von einem ersten Motor 27 angetrieben. Sie begrenzen das Annahmefach 16, bei dem die Schiebetür 18 und die Verschlußklappe 26 nicht gleichzeitig geöffnet sind. Damit wird sichergestellt, daß während des Annahmevorgangs die weiteren Teile der Vorrichtung nicht von außen zugänglich sind.

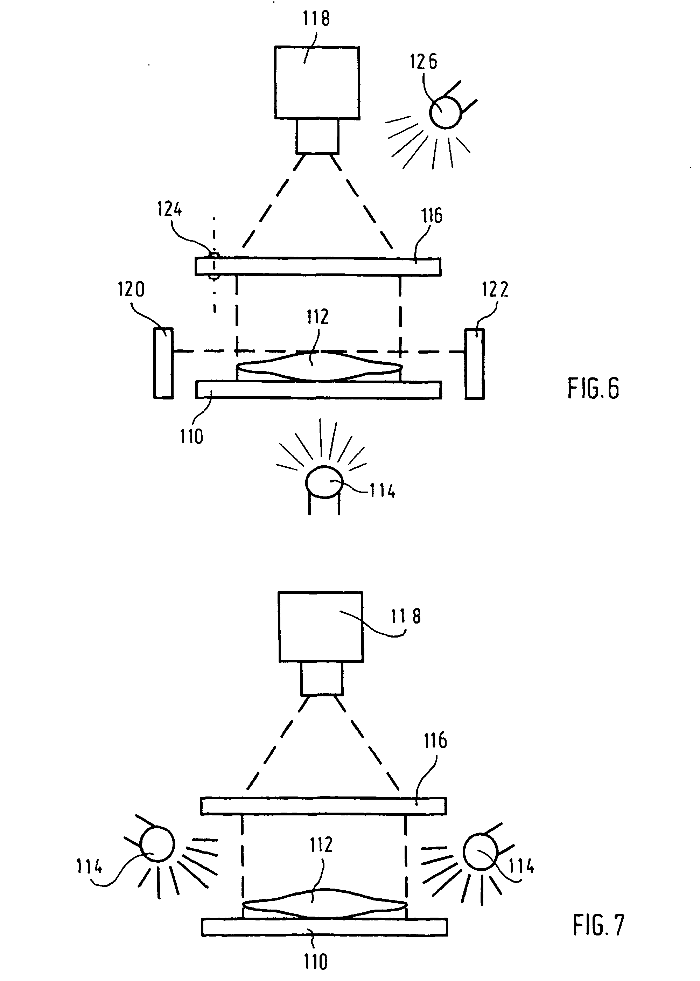

Ein einzulieferndes Poststück 112 (Fig. 6) wird bei geöffneter Schiebetür 18a und heruntergeklappter Verschlußklappe 26a von einem einliefernden Kunden auf eine Dispositionsplatte 38, welche sich dazu im Annahmefach 16 befindet, gelegt. Die Dispositionsplatte 38 bildet in der dargestellten Ausführungsform den Boden einer Schublade 36, die durch einen Schlitz 25 unterhalb der heruntergeklappten Verschlußklappe 26a in das Annahmefach 16 und über die Wägeplatte 20 geschoben werden kann.

Oberhalb der Wägeplatte 20 und in der Nähe einer hinteren Öffnung 28 des Annahmefachs 16 ist an dessen Seitenwänden 30 eine senkrecht stehende Lichtschrankenzeile 32 mit einer Senderzeile 32' und einer Empfängerzeile 32" befestigt. Unmittelbar hinter der Schiebetür 18 ist in den Rahmen 14 eine Reihe von Reflexlichtschranken 34 eingebaut, deren Abtastrichtung senkrecht nach oben weist. Die Reflexlichtschranken 34 sind mit geringem Abstand über die gesamte Breite des Annahmefachs 16 verteilt.

Auf dem Rahmen 14 ist die Schublade 36 mit Hilfe eines zweiten Motors 37 zwischen einer in das Annahmefach 16 eingefahrenen Position P22 und verschiedenen außerhalb des Aufnahmefachs 16 liegenden Positionen P58, P56, P60 verfahrbar. Die Schublade 36 weist einen Boden 38 aus einem opaken Material, transparente Seitenwände 40 und eine Rückwand 42 auf. An ihrer Vorderseite 44 und nach oben ist die Schublade 36 offen. In ihrer in das Annahmefach 16 eingefahrenen Position P22 ist die Schublade 36 durch einen nicht dargestellten Verstellantrieb auf die Wägeplatte 20 absenkbar. An der Rückwand 42 der Schublade 36 ist ein Schwenkantrieb 46 angebracht, an der auch eine Wendeplatte 48 aus opakem Material schwenkbar befestigt ist. Der Schwenkantrieb 46 ermöglicht die voneinander unabhängige Verschwenkung der Schublade 36 und der Wendeplatte 48 oberhalb des Rahmens 14 um eine zur Rückwand 42 parallele Schwenkachse 50 jeweils um 180°, sowie eine Absenkung nach unten.

An einen Seitenholm 52 des Rahmens 14 ist eine Fresnel-Linse 54 so angelenkt, daß sie mit Hilfe eines dritten Motors 55 zwischen einer die Schublade 36 überdeckenden Position und einer aus dem Verschiebeweg der Schublade herausgeschwenkten Position motorisch verschwenkbar ist. Mittig über der -auf die Schublade 36 herabgeschwenkten-Fresnel-Linse 54 ist eine Flächen-Videokamera 56 angeordnet, deren Öffnungswinkel die Erfassung der gesamten Oberfläche der Fresnel-Linse 54 erlaubt. Neben dieser ist mittig über dem Rahmen 14 noch eine hochauflösende Zeilen-Videokamera 58 angebracht, deren Öffnungswinkel der Breite der Schublade 36 entspricht. Eine Applikationseinrichtung 60 für Markierungen, insbesondere Klebeetiketten 61 und Wertmarken ist durch einen vierten Motor A' über die gesamte Breite der Schublade 36 in Richtung eines Doppelpfeils A bewegbar. Ein fünfter Motor B' vermag die Applikationseinrichtung 60 in Richtung des Doppelpfeils B auf die Schublade 36 abzusenken und wieder anzuheben. Die Applikationseinrichtung 60 umfaßt ein Rohr 62, das an eine nicht dargestellte Vakuumpumpe angeschlossen ist, und dessen unteres Ende von einem elastischen Kissen 64 aus einem geschlossenzelligen Schaumkunststoff umgeben ist. Durch den fünften Motor B' ist das Rohr 62 ferner zusammen mit dem Kissen 64 um die Längsachse des Rohres drehbar, wie der Doppelpfeil C verdeutlicht.

Die Motoren für die vorgenannten Bewegungsabläufe sind mit einer Steuereinrichtung 66 verbunden. Die Endlagen der Schiebetür 18, der Verschlußklappe 26, des Schwenkantriebs 46 und der Fresnel-Linse 54 werden von nicht dargestellten Endschaltern ebenfalls an die Steuereinrichtung 66 gemeldet, die die Antriebsmotoren abhängig von diesen Meldungen steuert. Die Position der Schublade 36 auf ihrem Verschiebeweg und die Koordinaten der Manipulator-Antriebe werden durch Sensoren an die Steuereinrichtung 66 gemeldet. Mit letzterer sind auch die Datenausgänge der Waage 22 und der Kameras 56 und 58 sowie die Lichtschranken 32 und 34 verbunden. Die Verbindungen sind durch Verbindungspfeile a bis r symbolisch dargestellt.

In der Bereitschaftsposition der Vorrichtung 10 ist die Schiebetür in die Position 18a und die Verschlußklappe in die Position 26a gefahren. Die Schublade 36 befindet sich im Annahmefach 16. Die genannten Elemente sind in dieser Position -beispielsweise durch eine motortypische Selbsthemmung- verriegelt.

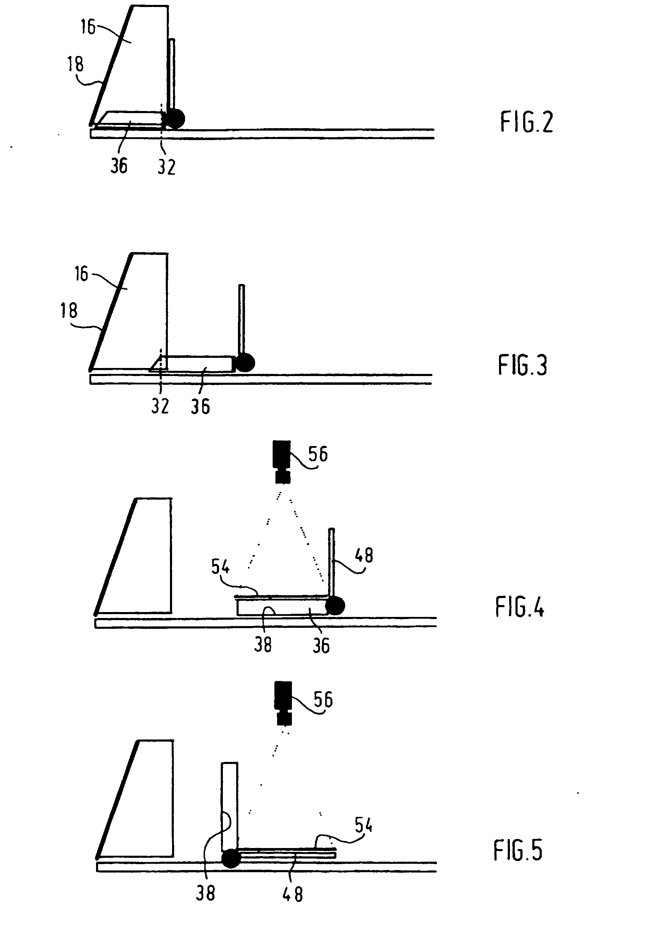

Die Figuren 2 bis 5 zeigen die Vorrichtung 10 in verschiedenen Arbeitspositionen. In Figur 2 ist die Situation unmittelbar nach dem Ablegen eines Poststücks in der Schublade 36 dargestellt. Die Schiebetür 18 ist geschlossen und die Schublade 36 auf die Wägeplatte 20 abgesenkt. In dieser Position kann die Waage 22 das Gewicht des eingelegten Poststücks ermitteln und an die Steuerung melden. Nach dem Wägevorgang wird die Schublade 36 wieder angehoben und aus dem Annahmefach 16 nach hinten herausgefahren. Nach Zurücklegen einer vorgegebenen Wegstrecke -im Ausführungsbeispiel sind dies 4 cm- dürfen die Reflexlichtschranken 34 kein an dem Poststück reflektiertes Licht mehr empfangen. Sollte dies doch der Fall sein, so wertet die Steuereinrichtung 66 dies als Indiz dafür, daß das Poststück 112 von der Schiebetür 18 eingeklemmt worden ist. In diesem Fall wird die Schublade 36 in ihre Ruheposition zurückgefahren und die Schiebetür 18 geöffnet. Sind hingegen alle Reflexlichtschranken 34 frei, setzt die Schublade 36 ihren Weg fort. Dabei wird die gesamte Schubladenfläche durch die transparenten Seitenwände 40 hindurch von der Lichtschrankenzeile 32 überstrichen. Abhängig von der Höhe des Poststücks wird ein Teil der Lichtschrankenempfänger 32" abgedunkelt. Die Zahl der abgedunkelten Lichtschrankenempfänger 32" ist ein Maß für die Höhe des Poststücks und wird ebenfalls an die Steuereinrichtung 66 gemeldet. Figur 3 zeigt die Situation nach Beendigung der Dickenmessung.

In Figur 4 hat die Schublade 36 den Erfassungsbereich der Flächenkamera 56 erreicht und ist dort angehalten worden. Die Fresnel-Linse 54 ist auf die Schublade 36 geschwenkt worden. Der opake Boden 38 der Schublade 36 wird von unten diffus durchleuchtet. Die Flächenkamera 56 erfaßt die Umrisse des Poststücks, was dank der Parallelisierung der Lichtstrahlen durch die Fresnel-Linse 54 parallaxenfrei möglich ist. Das Videosignal der Flächenkamera 56 wird zu der Steuereinrichtung 66 übertragen und dort abgespeichert. Nun wird die Fresnel-Linse 54 über dem Poststück 112 weggeschwenkt. Die hochauflösende Kamera 58 sendet darauf die Videosignale einer exakten Ablichtung des Poststücks 112, in der nicht nur die Umrisse dieses Poststücks sondern die gesamte Oberfläche mit dem Adressenfeld enthalten ist, an die Steuereinrichtung 66.

Der Kunde wird nun aufgefordert die gewünschte Versandart, beispielsweise "Standardbrief", "Eilboten", "Einschreiben" auf einer Tastatur 68 einzugeben. Die Steuereinrichtung 66 berechnet nun aufgrund dieser Angaben und des Gewichts, der Dicke, Länge und Breite des Poststücks das zu zahlende Porto und zeigt dieses dem Kunden an. Gleichzeitig wird auf einem Bildschirm 70 das Poststück 112 in einer normierten Lage, d.h. mit zu den Bildschirmrändern parallelen Kanten, abgebildet. In der rechten oberen Ecke des Poststücks ist eine Freimachung in Gestalt eines Etiketts symbolisch eingeblendet. Stimmt der Kunde der Anordnung dieses Etiketts zu, so entrichtet er das angezeigte Porto an einem Einzahlungsautomaten 72 und betätigt eine Abschlußtaste. Alternativ kann auch eine maschinenlesbare und ggf. elektronisch entwertbare Briefmarke Verwendung finden. Akzeptiert der Kunde den Anbringungsort der Freimachung hingegen nicht, beispielsweise weil das Etikett das Anschriftenfeld überdecken würde, so kann er per Tastendruck auf dem Bildschirm 70 das Bild des Poststücks jeweils um 90° drehen, bis er einen ihm genehmen Anbringungsort für das Etikett gefunden hat. Durch Steuertasten kann dem Kunden die Möglichkeit gegeben werden, die vorgeschlagene Position zu modifizieren. Auf dem Bildschirm 70 ist auch zu erkennen, wenn das Poststück 112 mit dem Adressenfeld nach unten in die Schublade 36 gelegt wurde. Der Kunde hat dann die Möglichkeit, durch Betätigen einer Taste "Poststück wenden" das Poststück 112 umzudrehen. Dies geschieht folgendermaßen: Die Wendeplatte 48 wird aus ihrer in Figur 1 dargestellten aufrechten Stellung auf die Schublade 36 geschwenkt. Anschließend wird die gesamte Anordnung um 180° nach rechts geschwenkt, so daß das Poststück 112 auf der Wendeplatte 48 zu liegen kommt. Anschließend wird die Schublade 36 um 90° zurückgeschwenkt. Nun wird die gesamte Anordnung aus Schublade 36 und Wendeplatte 48 um die Breite der Wendeplatte 48 nach links gefahren, so daß das Poststück 112 wieder unter der Flächenkamera 56 und der hochauflösenden Kamera 58 zu liegen kommt. Diese Situation ist in Figur 5 dargestellt. Die Kameras 56, 58 ermitteln nun nacheinander noch einmal bei heruntergeschwenkter Fresnel-Linse 54 die Lage des Poststücks 112 auf der Wendeplatte 48 und bei herausgeschwenkter Fresnel-Linse 54 das exakte Bild des Poststücks. Der Postkunde hat nun noch einmal die Möglichkeit, den Anbringungsort des Etiketts 61 auf dem Poststück 112 zu bestimmen.

Alternativ zu der geschilderten Verwendung der Wendeplatte 48 als Dispositionsplatte kann auch, nachdem die Schublade 36 zurückgeschwenkt wurde, die Wendeplatte 48 ihrerseits wieder geschwenkt werden, so daß das Poststück in der umgedrehten Stellung in Schublade 36 rutscht und dort weiterbearbeitet werden kann.

Nach Begleichung des Portos und der Freigabe des Etikettierungsortes auf dem Poststück 112 wird von einem mit der Steuereinrichtung 66 verbundenen Etikettendrucker 74 ein entsprechend bedrucktes Etikett 61 bereitgestellt und von der Applikationseinrichtung 60 abgeholt. Dies geschieht dadurch, daß das Kissen 64 über das Etikett 61 gebracht und auf dieses absenkt wird. Der in dem Rohr 62 erzeugte Unterdruck führt zur Ansaugung des Etiketts an das Kissen 64, wo es festgehalten wird. Die Steuereinrichtung 66 errechnet nun aus der tatsächlichen Lage des Poststücks und dem Plazierungswunsch des Kunden den tatsächlichen Anbringungsort des Etiketts 61 und steuert die Applikationseinrichtung 60 über den gewünschten Anbringungsort und drückt das Etikett auf das Poststück 112. Dadurch, daß das Kissen elastisch ist, kann das Etikett 61 auch auf unebene Oberflächen aufgebracht werden.

Handelte es sich bei dem Poststück beispielsweise um eine Einschreibsendung, so wird mit der hochauflösenden Kamera 58 ein sehr genaues elektronisches Bild von der Vorder- und Rückseite dieses Poststücks aufgenommen und in einem Recherchencomputer abgespeichert, von wo es abgerufen und ausgedruckt werden kann, wenn etwa nach einem verlorengegangenen eingeschriebenen Poststück gefahndet werden soll. Es ist auch möglich, ein Bild des Poststücks 112 auf einem Einlieferungsschein abzudrucken, der dann dem Kunden als Quittung ausgehändigt wird.

Nach endgültiger Abfertigung eines Poststücks wird die Schublade 36 nach unten geschwenkt, so daß das Poststück 112 in einen unter dem Rahmen 14 angeordneten Sammelbehälter 76 gleiten kann. Es ist auch möglich, mehrere Sammelbehälter 76, 78, beispielsweise für Standardsendungen oder für eingeschriebene und Eilsendungen, unter dem Rahmen 14 anzuordnen. Die Schublade 36 muß dann vor dem Abkippen des Poststücks 112 über den entsprechenden Behälter gefahren werden. Ein hinten liegender Behälter 78 wird erreicht, indem das Poststück 112 von der Wendeplatte 48 abgekippt wird.

In Figur 6 erkennt man eine einen lichtdurchlässigen Diffusor bildende Mattscheibe 110, auf der das zu vermessende Poststück 112 ruht. Unterhalb der Mattscheibe 110 befindet sich eine Lichtquelle 114. Oberhalb der Mattscheibe ist in einem Abstand, welcher dem dicksten zu verarbeitenden Poststück entspricht, eine Fresnel-Linse 116 angeordnet, deren Flächenmaße größer als die Ausdehnung des größten zu verarbeitenden Poststücks sind. Über der Fresnel-Linse 116 ist eine elektronische Kamera 118 angeordnet. Die Kamera 118 und die Fresnel-Linse 116 sind relativ zueinander so angeordnet, daß der Brennpunkt beider zusammenfällt. Da durch die Fresnel-Linse 116 nur die parallel zu der optischen Achse verlaufenden Bildstrahlen von der Kamera 118 erfaßt werden, wird der Umriß des Poststücks 112, der sich gegenüber der diffus leuchtenden Mattscheibe 110 abhebt, parallaxefrei von der Kamera 118 erfaßt. Die Höhe oder Dicke des Poststücks 112 kann wiederum durch eine -schematisch dargestellte- Zeilenlichtschranke 120, 122 erfaßt werden.

Für Quittungszwecke oder für die weitere Bearbeitung des Poststücks 112 kann auch hier die Oberseite der Postsendung fotografiert werden. Zu diesem Zweck ist die Fresnel-Linse 116 so angeordnet, daß sie aus dem Strahlengang der Kamera 118 ausrückbar ist. Dies kann in der in Figur 6 angedeuteten Weise dadurch erfolgen, daß die Fresnel-Linse 116 um eine vertikale Achse 124 schwenkbar gelagert ist. Ferner ist bei der Lösung nach Figur 6 eine weitere Lichtquelle 126 oberhalb der Mattscheibe 110 angeordnet, um die Oberseite des Poststücks 112 beleuchten zu können, wenn diese von der Kamera 118 aufgenommen werden soll. Für dies Aufnahme wird somit die Lichtquelle 114 aus- und die Lichtquelle 126 eingeschaltet. Die Verstellung der Fresnel-Linse 116 und die Beleuchtungsumschaltung erfordern keinen großen technischen Aufwand. Somit kann mit nur einer Kamera sowohl die Kontur des Poststücks 112 parallaxefrei vermessen als auch dessen Oberfläche abgebildet werden.

Figur 7 zeigt eine Ausführungsform, die sich von der gemäß Figur 6 lediglich durch die Anordnung der Lichtquelle und gegebenenfalls die Ausbildung der Dispositionsfläche unterscheidet. Gleiche Teile sind mit gleichen Bezugszeichen versehen. Die Lichtquelle 114 ist bei der Ausführungsform gemäß Figur 7 oberhalb der Dispositionsfläche 110 angeordnet, wobei diese wiederum als lichtstreuende Fläche ausgebildet ist. Sie kann eine Mattscheibe wie bei Figur 6 oder auch eine lichtundurchlässige, beispielsweise weiße Platte sein. Die Anordnung der Fresnel-Linse 116 und der Kamera 118 ist wie bei dem in Figur 6 gezeigten Ausführungsbeispiel. Diese Lösung hat den Vorteil, daß eine Beleuchtungsumschaltung entfällt, wenn die Fresnel-Linse 116 für die Abbildung der Oberfläche des Poststücks 112 aus dem Strahlengang der Kamera 118 ausgerückt wird.

An der beschriebenen Einrichtung sind verschiedene Abänderungen möglich, ohne den Rahmen der Erfindung zu sprengen: Statt der Erfassung der Poststück-Dicke mit Hilfe einer Lichtschrankenzeile ist es möglich, eine parallel zu dem Boden 38 der Schublade 36 ausgerichtete Andruckplatte von oben auf das Poststück abzusenken. Der Verschiebeweg ist dann ein Maß für die Dicke des Poststücks. Diese Anordnung hat den Vorteil, daß mit der Andruckplatte gewölbte Poststücke flach gedrückt werden können und Verknickungen heruntergebogen werden. Damit ist eine exaktere Dickenermittlung möglich. Statt einer Applikationseinrichtung für Etiketten kann an dem Manipulator ein Druckkopf, vorzugsweise ein Tintenstrahldruckkopf angebracht werden, mit dem ein Freimachungsvermerk direkt auf das Poststück gedruckt werden kann.

Das Umrißbild und die exakte Aufnahme des Poststücks können mit einer einzigen Kamera erzeugt werden. Die Videosignale des hoch aufgelösten Videobildes können einem Schriftenerkennungsverfahren unterzogen werden mit dem Ziel, die Postleitzahl aus der Anschrift automatisch zu erfassen. Mit dieser Information kann eine Briefsortieranlage direkt gesteuert oder aber die Postleitzahl in einer von nachgeordneten Briefsortieranlagen lesbaren Kodierung auf das Poststück oder auf das Etikett 61 gedruckt werden. Die so bestimmte Postleitzahl kann dem Kunden zur Überprüfung oder Korrektur angeboten werden.

## Patentansprüche

1. Vorrichtung (10) zur Vermessung von Poststücken (112) mit.
- einer Dispositionsplatte (38, 110), auf der ein zu vermessendes Poststück (112) abzulegen ist,
- einer Steuereinrichtung (66),
- mindestens einer Meßeinrichtung (20, 22; 32', 32"; 56; 118) für physikalische Eigenschaften des Poststücks (112), deren Meßdaten der Steuereinrichtung (66) zugeleitet werden,
- einer Lichtquelle (114) zum Beleuchten der Dispositionsplatte (38, 110), **dadurch gekennzeichnet**, dass über der Dispositionsplatte (38, 110) eine Fresnel-Linse (54, 116) und darüber eine elektro-optische Meßeinrichtung (56, 118) für die Länge und Breite des Poststücks (112) angeordnet ist, wobei der Brennpunkt der Fresnel-Linse (54, 116) in dem Brennpunkt der elektrooptischen Meßeinrichtung (56, 118) liegt und die Abmessungen der Fresnel-Linse (54, 116) größer als die senkrechte Projektion des größten zu vermessenden Poststücks (112) auf die Dispositionsplatte (38, 110) ist, und wobei die Dispositionsplatte (38, 110) eine lichtstreuende Fläche ist und die Lichtquelle (114) darunter angeordnet ist.

2. Vorrichtung nach einem der Ansprüche 1 bis 4, **dadurch gekennzeichnet, daß** die Fresnel-Linse (54, 116) zwischen einer die Dispositionsplatte (38, 110) überdeckenden und einer diese freigebenden Position verschwenkbar ist.

3. Vorrichtung (10) zur Vermessung von Poststücken (112) mit
- einer Dispositionsplatte (38, 110), auf der ein zu vermessendes Poststück (112) abzulegen ist,
- einer Steuereinrichtung (66),
- mindestens einer Meßeinrichtung (20, 22; 32', 32''; 56; 118) für physikalische Eigenschaften des Poststücks (112), deren Meßdaten der Steuereinrichtung (66) zugeleitet werden,
**dadurch gekennzeichnet, daß** unterhalb der Dispositionsplatte (38, 110) eine Lichtquelle (114) zu deren Beleuchtung, zwischen dieser und der Dispositionsplatte (38, 110) eine Fresnel-Linse (54, 116), über der Dispositionsplatte (38, 110) ein lichtdurchlässiger Diffusor und darüber eine elektro-optische Meßeinrichtung (56, 118) für die Länge und Breite des Poststücks (112) angeordnet ist.

4. Vorrichtung nach Anspruch 3, **dadurch gekennzeichnet, daß** die Dispositionsplatte (38, 110) von der der elektro-optischen Meßeinrichtung (56, 118) zugewandten Seite der Fresnel-Linse (54, 116) gebildet ist.

5. Vorrichtung nach Anspruch 3, **dadurch gekennzeichnet, daß** die Dispositionsplatte (38, 110) von einer zwischen der Fresnel-Linse (54, 116) und dem Diffusor angeordneten transparenten Platte gebildet ist.

6. Vorrichtung nach einem der vorhergehenden Ansprüche, **dadurch gekennzeichnet, daß** die elektro-optische Meßeinrichtung eine elektronische Kamera (58; 56, 118) ist.

7. Vorrichtung nach einem der vorhergehenden Ansprüche, **gekennzeichnet durch** eine seitlich der Dispositionsplatte (38, 110) angebrachte relativ zu dem Poststück (112) verschiebliche elektro-optische Meßvorrichtung für die Höhe des Poststücks (112) mit einer eindimensionalen Meßzeile (32', 32''; 120, 122).

8. Vorrichtung nach einem der vorhergehenden Ansprüche, **dadurch gekennzeichnet, daß** die Dispositionsplatte (38, 110) unter Steuerung durch die Steuereinrichtung (66) verschieblich ist.

9. Vorrichtung nach Anspruch 8, **dadurch gekennzeichnet, daß** die elektronische Kamera eine Zeilenkamera (58) mit einem der Breite der Dispositionsplatte (38, 110) entsprechenden Öffnungswinkel ist, unter der das Poststück (112) hindurch bewegbar ist.

10. Vorrichtung nach Anspruch 8 oder 9, **gekennzeichnet durch** eine Waage (22), über die die Dispositionsplatte (38, 110) bringbar und dort für eine Wägung des Poststücks (112) absenkbar ist.

11. Vorrichtung nach einem der vorhergehenden Ansprüche, **dadurch gekennzeichnet, daß** in der Steuereinrichtung (66) aus den Meßdaten eine Gebühr ermittelt wird, die auf einer Anzeige angezeigt wird, und daß eine Kassiereinrichtung (72) vorgesehen ist, welche nach Vereinnahmung der Gebühr über die Steuereinrichtung (66) eine Applikationseinrichtung (60) zum Aufbringen einer Markierung (61) freigibt.

12. Vorrichtung nach einem der Ansprüche 8 bis 11, **dadurch gekennzeichnet, daß** die Dispositionsplatte (38, 110) den Boden einer nach oben und an ihrer Vorderseite (44) offenen Schublade (36) bildet, welche um eine parallel zu ihrer Rückwand (42) verlaufende Schwenkachse (50) schwenkbar ist.

## Claims

1. Device (10) for measuring mail items (112), having
- a support plate (38, 110) on which a mail item (112) to be measured should be placed,
- a control unit (66),
- at least one measuring instrument (20, 22; 32', 32''; 56; 118) for physical properties of the mail item (112), the measurement data from which are fed to the control unit (66),
- a light source (114) for illuminating the support plate (38, 110), **characterized in that** a Fresnel lens (54, 116) is arranged above the support plate (38, 110) and an electro-optical measuring instrument (56, 118) for the length and width of the mail item (112) is arranged above this, the focal point of the Fresnel lens (54, 116) lying at the focal point of the electro-optical measuring instrument (56, 118) and the dimensions of the Fresnel lens (54, 116) being greater than the perpendicular projection, onto the support plate (38, 110), of the largest mail item (112) to be measured, and the support plate (38, 110) being a light-scattering surface and arranged below the light source (114).

2. Device according to one of Claims 1 to 4, **characterized in that** the Fresnel lens (54, 116) can be tilted between a position which covers the support plate (38, 110) and a position in which the latter is free.

3. Device (10) for measuring mail items (112), having
- a support plate (38, 110) on which a mail item (112) to be measured should be placed,
- a control unit (66),
- at least one measuring instrument (20, 22; 32', 32''; 56; 118) for physical properties of the mail item (112), the measurement data from which are fed to the control unit (66),
**characterized in that** a light source (114) is arranged below the support plate (38, 110) in order to illuminate it, a Fresnel lens (54, 116) is arranged between this and the support plate (38, 110), an optically transmissive diffuser is arranged above the support plate (38, 110) and an electro-optical measuring instrument (56, 118) for the length and width of the mail item (112) is arranged above the latter

4. Device according to Claim 3, **characterized in that** the support plate (38, 110) is formed by the side of the Fresnel lens (54, 116) which faces the electro-optical measuring instrument (56, 118).

5. Device according to Claim 3, **characterized in that** the support plate (38, 110) is formed by a transparent plate arranged between the Fresnel lens (54, 116) and the diffuser.

6. Device according to one of the preceding claims, **characterized in that** the electro-optical measuring instrument is an electronic camera (58; 56, 118).

7. Device according to one of the preceding claims, **characterized by** an electro-optical measuring device for the height of the mail item (112), which has a one-dimensional measuring line (32', 32"; 120, 122), is fitted laterally with respect to the support plate (38, 110) and can move relative to the mail item (112).

8. Device according to one of the preceding claims, **characterized in that** the support plate (38, 110) can be moved at the instigation of the control unit (66).

9. Device according to Claim 8, **characterized in that** the electronic camera is a linear camera (58) with an aperture angle corresponding to the width of the support plate (38, 110), below which the mail item (112) can be moved through.

10. Device according to Claim 8 or 9, **characterized by** a balance (22) above which the support plate (38, 110) can be brought and lowered there to weigh the mail item (112).

11. Device according to one of the preceding claims **characterized in that** a price is determined from the measurement data in the control unit (66) and shown on a display, and **in that** a payment device (72) is provided which enables an applicator (60) via the control unit (66) in order to apply a marking (61) after the price has been paid.

12. Device according to one of Claims 8 to 11, **characterized in that** the support plate (38, 110) forms the bottom of a tray (36) which is open at the top and on its front side (44), and which can be tilted about a tilting axis (50) extending parallel to its rear wall (42).

## Revendications

1. Dispositif (10) pour mesurer des envois postaux (112) comportant
- une plaque de dépôt (38, 110) sur laquelle on peut déposer un envoi postal (112) à mesurer,
- une installation de commande (66),
- au moins une installation de mesure (20, 22 ; 32', 32'' ; 56 ; 118) destinée à établir les propriétés physiques de l'envoi postal (112) dont les données mesurées sont acheminées à l'installation de commande (66) et
- une source lumineuse (114) pour éclairer la plaque de dépôt (38, 110),
**caractérisé en ce qu'**une lentille de Fresnel (54, 116) et par-dessus une installation de mesure (56, 118) électro-optique qui détermine la longueur et la largeur de l'envoi postal (112) sont placées au-dessus de la plaque de dépôt (38, 110), le foyer de la lentille de Fresnel (54, 116) étant alors au foyer de l'installation de mesure (56, 118) électro-optique et la lentille de Fresnel (54, 116) a des dimensions plus grandes que la projection orthogonale du plus grand des envois postaux (112) à mesurer sur la plaque de dépôt (38, 110) et la plaque de dépôt (38, 110) est une surface qui diffuse la lumière et au-dessous de laquelle est placée la source lumineuse (114).

2. Dispositif selon l'une des revendications 1 à 4, **caractérisé en ce que** la lentille de Fresnel (54, 116) peut pivoter entre une position qui recouvre la plaque de dépôt (38, 110) et une position qui la libère.

3. Dispositif (10) pour mesurer des envois postaux (112) comportant
- une plaque de dépôt (38, 110) sur laquelle on peut déposer un envoi postal (112) à mesurer,
- une installation de commande (66),
- au moins une installation de mesure (20, 22 ; 32', 32'' ; 56 ; 118) destinée à établir les propriétés physiques de l'envoi postal (112) dont les données mesurées sont acheminées à l'installation de commande (66),
**caractérisée en ce qu'**une source lumineuse (114) destinée à l'éclairer est placée au-dessous de la plaque de dépôt (38, 110), une lentille de Fresnel (54, 116) entre la source lumineuse et la plaque de dépôt (38, 110), un diffuseur translucide sur la plaque de dépôt (38, 110) et par-dessus une installation de mesure (56, 118) électro-optique qui détermine la longueur et la largeur de l'envoi postal (112).

4. Dispositif selon la revendication 3, **caractérisé en ce que** la plaque de dépôt (38, 110) est formée par le côté - de la lentille de Fresnel (54, 116) - tourné vers l'installation de mesure (56, 118) électro-optique.

5. Dispositif selon la revendication 3, **caractérisé en ce que** la plaque de dépôt (38, 110) est formée par une plaque transparente placée entre la lentille de Fresnel (54, 116) et le diffuseur.

6. Dispositif selon l'une des revendications précédentes, **caractérisé en ce que** l'installation de mesure électro-optique est une caméra (58 ; 56, 118) électronique.

7. Dispositif selon l'une des revendications précédentes, **caractérisé par** une installation de mesure électro-optique appliquée sur le côté de la plaque de dépôt (38, 110) et mobile par rapport à l'envoi postal (112) pour déterminer la hauteur de l'envoi postal (112) à l'aide d'une rangée de mesure (32', 32'' ; 120, 122) à une dimension.

8. Dispositif selon l'une des revendications précédentes, **caractérisé en ce que** la plaque de dépôt (38, 110) est mobile du fait qu'elle est commandée par l'installation de commande (66).

9. Dispositif selon la revendication 8, **caractérisé en ce que** la caméra électronique est une caméra de rangée (58) dont l'angle d'ouverture correspond à la largeur de la plaque de dépôt (38, 110) et au-dessous de laquelle peut passer l'envoi postal (112).

10. Dispositif selon la revendication 8 ou 9, **caractérisé par** une balance (22) au-dessus de laquelle la plaque de dépôt (38, 110) peut être apportée et être abaissée pour peser l'envoi postal (112).

11. Dispositif selon l'une des revendications précédentes, **caractérisé en ce que** l'installation de commande (66) détermine à partir des données de mesure un tarif affiché sur un affichage et qu'au moyen de l'installation de commande (66) une installation d'encaissement (72) libère une installation d'application (60) destinée à appliquer un repère (61) après que le tarif a été encaissé.

12. Dispositif selon l'une des revendications 8 à 11, **caractérisé en ce que** la plaque de dépôt (38, 110) forme le fond d'un tiroir (36), ouvert vers le haut et vers le côté avant (44), qui peut pivoter autour d'un axe de pivotement (50) parallèle à sa paroi arrière (50).
